Europäisches Patentamt

European Patent Office          (11) Publication number: **0 006 646**
**A1**

Office européen des brevets

(19)

(12)                    **EUROPEAN PATENT APPLICATION**

(21) Application number: **79200282.6**          (51) Int. Cl.³: **A 23 F 5/44, A 23 F 5/48**

(22) Date of filing: **07.06.79**

---

(30) Priority: **22.06.78 US 918019**

(43) Date of publication of application: **09.01.80** Bulletin **80/1**

(84) Designated Contracting States: **AT BE CH DE FR GB IT NL SE**

(71) Applicant: **THE PROCTER & GAMBLE COMPANY, 301 East Sixth Street, Cincinnati Ohio 45217 (US)**

(72) Inventor: **Strobel, Rudolf Gottfried Karl, 7305 Thompson Road, Cincinnati, Ohio 45247 (US)**

(74) Representative: **Gibson, Tony Nicholas et al, Procter & Gamble European Technical Center Temselaan 100, B-1820 Strombeek-Bever (BE)**

---

(54) **Improved coffee-like instant coffee-grain beverage and method for preparing it.**

(57) An improved coffee-like instant coffee-grain dry beverage mix having an orthodox coffee flavor, taste and aroma is made from 15 to 98 wt. % refined grain extract powder, 0 to 84 wt. % coffee base extract powder, and from about 0.05 to about 3 wt. % of cryogenically collected coffee aroma-flavor compounds. This dry mix provides a beverage which smells and tastes like real coffee, and in its preferred embodiment is surprisingly as acceptable or superior as a "coffee" beverage to coffee drinkers as leading 100% instant coffees.

IMPROVED COFFEE-LIKE INSTANT COFFEE-GRAIN BEVERAGE

The history of the use of coffee substitutes is probably as old as the use of coffee itself. Reasons for their use include (1) lower cost where the substitute material may be substantially cheaper than coffee, (2) lack of availability due to political crisis, weather problems in the producing countries, etc., and (3) caffeine control.

Numerous coffee substitutes have been sold in Europe for quite some time and since the recent frost in Brazil several new coffee substitutes have been introduced in America. One of the leading coffee substitutes comprises chicory and coffee base. Another leading coffee substitute comprises wheat, bran, molasses and coffee base. Although such coffee substitutes have found some acceptance, most real coffee drinkers will bear witness that such coffee substitutes do not smell or taste like real coffee and are not as acceptable as 100% real coffee.

U.S. Patent No. 3,997,685, December 14, 1976, to Rudolf G.K. Strobel, discloses adding a coffee flavor/aroma frost to cereal solids to make a coffee-like product. This patent, however, does not teach the use of refined or deflavored cereal extract solids.

It is an object of the present invention to provide the consumer with a coffee-grain beverage mix which smells and tastes like 100% real coffee.

It is another object of the present invention to provide a method of making a coffee-grain beverage mix which smells and tastes like 100% real coffee.

Yet another object of the present invention is to provide a coffee-like coffee-grain beverage mix which is as acceptable to real coffee drinkers as real coffee itself.

## SUMMARY OF THE INVENTION

An improved coffee-like instant coffee-grain beverage mix having an orthodox coffee flavor, taste, and aroma is made from 15-98 wt. % refined grain extract, 0-84 wt. % coffee base extract, and from 0.05 to about 3.0 wt. % of cryogenically collected coffee aroma-flavor compounds.

The refined grain extract is refined by separating characteristic grainy flavor and aroma constituents from the grain or from an aqueous grain extract. The coffee aroma flavor compounds are prepared by collecting low-temperature vacuum steam-stripped or desorbed coffee aroma and flavor volatiles as a frost by condensation at a cryogenic temperature and an absolute pressure of from about 0.1 to about 200 mm of mercury. An improved coffee-like instant coffee-grain beverage mix comprising the refined grain extract, the coffee aroma-flavor compounds and a coffee base in the said amounts provides a beverage which smells and tastes like real coffee and in its preferred compositions is surprisingly as acceptable as coffee to real coffee drinkers as the leading 100% instant coffees.

## DETAILED DESCRIPTION OF THE INVENTION

The present invention provides an improved coffee-like instant coffee grain beverage mix having an orthodox coffee aroma and flavor. A beverage made with the mix of this invention is more satisfying to coffee drinkers than previous coffee substitutes. The invention attains this result from a novel combination of ingredients. Specifically, high quality coffee aroma-flavor compounds are combined with a refined grain extract and a coffee base extract. Taste tests have shown that beverages made from said coffee grain beverage mix are significantly preferred over the current leading coffee substitutes. Moreover, expert flavor panels show that the beverages of this invention are as acceptable in coffee flavor and aroma as the leading instant coffees.

The composition of the present invention comprises from 15 to 98 wt. % refined grain extract powder, 0-84 wt. % of coffee base extract, and from 0.05 to 3 wt. % of cryogenically collected coffee aroma-flavor compounds. A preferred composition of the instant coffee-grain dry beverage mix of the present invention comprises from about 15 to about 80 wt. % of refined grain extract, from about 1 to about 20 wt. % of a coffee aroma-flavor concentrate (AFC), and from about 2% to 60 wt. % of a coffee base extract. The AFC comprises the cryogenically collected coffee aroma-flavor compounds trapped in an extract matrix. A preferred composition made with AFC will preferably provide coffee aroma-flavor compounds in an amount of from about 0.1 wt. % to about 2.0 wt. %.

Sufficient solids must be provided to matrix the aroma-flavor compounds in the frost. In general, when using a $CO_2$ surge and a single trap, 100 grams of ground coffee will produce about 2 grams of flavor-aroma frost of which about 1,800 mg will be water and $CO_2$. The remainder is a complex mixture of about 200 mg of coffee aroma-flavor compounds which comprise about 190 mg of organic acids, such as, short and medium chain fatty acids ($C_1$-$C_{12}$), di- and tri-carboxylated acids, and other natural and basic aroma- flavor compounds, and about 10 mg of phenols and their derivatives. About 2 gm. of solids are preferably added to 2 gm of flavor-aroma frost, such solids should be at a concentration of 10 to 70 and preferably about 40% to minimize the amount of water which must be removed in the subsequent drying operation. Additionally and as is well known in the art, the use of higher initial concentration of solids in a flavor- and aroma-containing solution to be freeze-dried results in lower losses of flavor and aroma.

The refined grain extract of this invention is preferably prepared by: (a) distilling and separating grainy flavor and aroma constituents from an aqueous extract of roast and ground grain, said grain extract having an initial soluble solids content of from about 5% to about 25%; (b) concentrating said grain extract to 30 to 60% solids; and (c) drying said concentrated extract. The distilling, separating and concentrating of said grain extract can also be accomplished by a process known as flash or thin film evaporation.

Equipment for this operation is a Falling Film Evaporator, shown in Figure 11-16h and described on pages 11-29 of Chemical Engineers' Handbook, 5th Edition, by Perry, Robert H. and Chilton, Cecil H., McGraw-Hill Book Co. 1973.

Another preferred method of separating grainy flavor and aroma constituents from an aqueous extract of roast and ground grain comprises: (a) slowly passing water and wet steam through a zone containing roasted and ground grains in such a manner which avoids flooding of said zone and while said zone is held at an absolute pressure of from about 0.1 mm to 200 mm of mercury, thereby to provide a continually moving interface between dry and wetted particles of said roast and ground grain; (b) prior to the reaching of said moving interface to the end of said zone and the

-5-    0006646

emergence of a liquid grain extract from said zone, expelling a steam fraction containing objectionable grainy aroma and flavor bodies removed from said roast and ground grain. This liquid grain extract will preferably have an initial soluble solids content of about 5 to 20%. This aqueous grain extract can be further refined by the processes set out above for aqueous grain extracts, or it can be dried without further refining.

An alternative method of refining an aqueous grain extract is by passing steam through an aqueous solution containing up to 50% grain extract solids and thereby removing objectionable grainy flavor bodies therefrom. Other alternative methods of making refined grain extract of this invention are also contemplated as within the spirit and scope of the present invention.

The grain extract of this invention is prepared from roast and ground grain selected from the group consisting of malted barley, barley, rye and wheat, corn, chicory, and soybean. Roasted malted barley having a color of 65 to 95 photovolts is the preferred grain from which the grain extract is made. A most preferred color is 67 to 69.

The coffee AFC of this invention is preferably prepared by processes comprising the steps of: (a) desorbing or steam-stripping roast and ground coffee at a temperature below 100°C and an absolute pressure of from 0.1 mm to 200 mm of mercury; (b) collecting desorbed or steam-stripped coffee aroma- flavor volatiles as a frost by condensation at a temperature of below about -73°C and at an absolute pressure of from about 0.1 mm to about 200 mm of mercury; (c) melting said frost by contacting it with an aqueous extract having a soluble solids content of from about 25% to about 65%, said extract being selected from the group consisting of extracts of coffee or grain; and (d) drying the melt and extract of step (c) to obtain said coffee AFC. The desorption processes are disclosed in detail in U.S. Patents Nos. 3,717,472 and 3,997,685, to the present inventor, R.G.K. Strobel; all of which patents are incorporated herein by reference in their entirety.

In one preferred process, the coffee aroma-flavor compounds are prepared by:-

(a) pulsing water and wet steam onto a zone containing roast and ground coffee at a temperature below 100°C and an absolute pressure of from 0.1mm to 200mm of mercury;

(b) collecting steam desorbed coffee aroma flavor volatile compounds as a frost by condensation at a temperature of below about -73°C and at an absolute pressure of from about 0.1 to about 200mm of mercury;

(c) melting said frost by contacting it with a sufficient amount of aqueous extract having a soluble solids content of from about 25% to about 65%, said extract being selected from the group consisting of extracts of coffee or grain; and

(d) drying the melt and extract of step (c) to trap said coffee aroma-flavor compounds in a coffee aroma-flavor concentrate.

In another preferred process, the coffee aroma-flavour compounds are prepared by:-

(a) slowly passing water and wet steam through a zone containing roasted and ground coffee in such a manner which avoids flooding of said zone and while said zone is held at a temperature below 100°C and at an absolute pressure of from about 0.1mm to 200mm of mercury, thereby to provide a continually moving interface between dry and wetted particles of said roast and ground coffee;

(b) prior to the reaching of said moving interface to the end of said zone and the emergence of a liquid extract from said zone;

(c) collecting steam desorbed coffee aroma-flavor volatile compounds as a frost by condensation at a temperature of below about $-73^{\circ}C$ and at an absolute pressure of from about 0.1 to about 200mm of mercury;

(d) melting said frost by contacting it with a sufficient amount of aqueous extract having a soluble solids content of from about 25% to about 65%, said extract being selected from the group consisting of extracts of coffee or grain; and

(e) drying the melt and extract of step (d) to trap said coffee aroma-flavor compounds in an aroma-flavor concentrate.

In the above processes, preferably the steam desorbed coffee aroma-flavor volatile compounds are collected as a frost at an absolute pressure of 80mm of mercury or below, and the frost is melted by contacting it with an amount of said aqueous extract at least of an equal weight as said frost.

The most preferred desorption process is set out in U.S. Patent Application, Serial No. 722,250, filed September 10, 1976, entitled "Improved Stable Aroma and Flavor Products", R.G.K. Strobel, herein incorporated by reference in its entirety.

According to this process the coffee-aroma compounds are prepared by pulsing or continuously passing wet steam into a zone containing said roasted and ground coffee in a manner which avoids flooding said zone and while said zone is held at an absolute pressure of from 0.1mm to 200mm of mercury, thereby providing continuously moving interface between dry and wetted particles of said roast and ground coffee; prior to the reaching of said moving interface to the end of said zone and the emergence of an aqueous coffee base extract from said zone, collecting a coffee aroma- and flavor-containing frost fraction by condensing aroma flavor volatile compounds removed from said roast and ground coffee at a temperature of from about -20°C to -200°C; thereafter melting said aroma- and flavor-containing frost fraction with an aqueous extract containing water-soluble solids selected from the group consisting of proteins and carboydrates, combining said frost fraction with said aqueous extract at a temperature below about 5°C in a closed container which has been purged with inert gas and which contains no air space surrounding said mixture; freezing said mixture with agitation at a temperature in the range of from about -4°C to -200°C to provide a frozen mixture wherein the ice crystals exceed 1000 microns; comminuting the resultant frozen mixture to a particle size of from about 500 to 2000 microns; and freeze-drying said particles.

A notable steam-stripping method is that of Richard Gregg, co-pending U.S. Patent 4,100,305, issued July 11, 1978, and entitled A METHOD OF MAKING AN IMPROVED COFFEE VOLATILES CONCENTRATE, herein incorporated by reference in its entirety.

Other alternative methods of cryogenically collecting coffee aroma-flavor compounds may be employed in the practice of the present invention.

0006646

A most preferred embodiment of the present invention comprises a mix containing from about 25-80 wt. % of the refined grain extract, from about 5-15% of the AFC and from about 30-60 wt. % of a suitable coffee base, wherein said mix comprises from 0.1 to about 2.0 wt. % of said cryogenically collected coffee aroma-flavor compounds.

The coffee base extract of the invention is prepared by conventional coffee extract operations or desorbate processing described in the above-mentioned patents and patent application to R.G.K. Strobel, incorporated herein by reference.

EXAMPLE I

A dry, refined grain extract was obtained from 500 g of roasted and ground malted barley. The barley was placed into a 5" ∅ glass column. The glass column was closed with a disk-shaped lid. The lid was equipped with four openings, a center opening, and three additional openings symmetrically arranged around the center opening. The center opening was used for placing a nozzle above the barley substrate bed. The distance between nozzle opening and substrate bed was 15 cm. Two of the remaining three openings were used for placing thermocouples into and above the substrate bed for temperature measurements during the run (two openings). The remaining opening was used for connecting a nitrogen line to the column.

The column was evacuated to an absolute pressure of 1mm. A condensing trap was placed between the vacuum pump and the column to condense volatile materials from the barley bed. The condenser was cooled with liquid nitrogen.

The volatiles were driven off by pulling spurts of boiling $H_2O$ through the nozzle. The spurts of hot water were partially transformed into steam (approximately 20% steam transformation at 1mm vacuum). The steam transformation also caused a temperature reduction of the steam/water mixture to $20^{\circ}C$.

The water was instantaneously soaked up by the substrate. The water caused the desorption of additional volatiles which were carried by the steam through the substrate bed (steam distillation). The volatiles and steam-distillable volatiles showed a faint yellowish tint when condensing in the trap. They also gave off a greenish, pungent unpleasant aldehydic aroma.

Addition of subsequent water/steam spurts ($\sim$ 10 ccm each) onto the substrate pushed the aqueous front deeper into the substrate bed, causing the desorption of additional volatiles, etc. After 13 minutes, a total of 900 ml of water was placed onto the substrate bed, at which point the aqueous front had reached the lower end of the substrate bed. Now, the condenser containing the volatiles and steam-distillable materials was replaced by a fresh condenser. This fraction was discarded.

Addition of subsequent water spurts onto the substrate bed caused the aqueous front, which contained water-soluble refined grain extract (pigments, carbohydrates, proteins, inorganic components, etc.) to exit into the new condenser. The new condenser was placed into a dry ice/solvent mixture.

After 38 minutes, 1.9 liters of hot $H_2O$ had been placed onto the substrate bed. 1029 ccm of $H_2O$-soluble grain solids were collected in the trap (draw-off ratio 1:2.06). This aqueous grain extract contained about 28% solids based on the weight of the starting roast and ground malted barley.

The aqueous grain extract was frozen, milled, and sieved. Particles ranging from 850 microns to 2000 microns were collected and freeze-dried. The dry refined grain extract exhibited a bland flavor.

A coffee aroma-flavor concentrate, of Example II, was uniformly mixed with the dry refined grain extract of this Example at a level of about 70 $\pm$ 10 mg per gram of grain extract. The coffee aroma-flavor concentrate contained about 3.2 wt. % of cryogenically collected coffee aroma-flavor compounds and about 96.8 wt. % coffee base extract. The coffee-grain dry beverage mix contained about 0.21% coffee aroma-flavor compounds and 6.3 wt. % coffee base extract.

A hot beverage prepared with this mix was described by expert coffee tasters as virtually indistinguishable from a 100% coffee beverage.

## EXAMPLE II

A. Twenty-five kg of coffee beans roasted to a photovolt reading of 70 were quenched, first with one liter of water and then with liquid nitrogen. The water quenching was carried out in the roaster ("Probat" roaster). Immediately after water-quenching, the beans were dumped into metal drums and shock-quenched with 20 kg of liquid nitrogen to a temperature of $\sim$ -10°C. One

kg of powdered Dry Ice was mixed into the quenched beans before grinding.

The beans were then ground to a coarse grind (instant coffee grind) and then immediately milled on a "Ross" mill with a distance of 88.9 microns (3.5 mils) between rolls. Hydraulic pressure on the rolls was 350 lbs. Speed of the rolls was 100 rpm.

B. Desorbate Column and Ancillary Equipment

The Desorbate Column consisted essentially of four components, namely:

1. A cylindrical section 60 cm in diameter and 50 cm high. Both ends of this section are ground.

2. A top section, dish-shaped with four openings, receiving a nozzle system for steam/water application, $CO_2$-purging, and thermocouples for temperature measurements. A hot water reservoir was connected to the nozzle system. A solenoid valve was placed between the hot water reservoir and the nozzle system.

The top section was placed on a stainless steel ring plate that provided via two O-rings, a vacuum-tight seal between the cylindrical- and top-section. The stainless steel ring also provided a means for lifting the top section for filling and discharging the column.

3. A false bottom, consisting of a 55% perforated stainless steel plate placed between the cylindrical section and the bottom section. Two O-rings provided a vacuum-tight seal between the two sections.

Seven layers of cheesecloth were placed on the perforated plate to prevent the flaked coffee from falling through when loading the column.

4. A dish-shaped bottom, equipped with a valve. The valve extended via vacuum tubing to a con-The condensing system was connected to a mechanical vacuum pump. The pump was protected with two cryogenic traps against water vapors.

The three column sections, made of "Duran" glass, were held together by metal flanges. The metal flanges were connected to metal plates which in turn connected to a tubular frame-system supporting the entire column setup.

C. Loading and Purging the Column

The lid section was lifted with a mechanical winch and 20 kg of coffee flakes were placed onto the false bottom (cheesecloth).

The coffee flakes were spread out to obtain a level bed surface in parallel with the false bottom plate. The lid was then lowered onto the cylindrical section and the air above the coffee bed was displaced with $CO_2$.

D. Preparation of Aroma/Flavor-Frost Condensing Vessels

The condensing system consisted of three 8-liter cylindrical flasks (18.7 cm diameter) placed in parallel between the column and the vacuum source. The condensing vessels were placed into liquid nitrogen. Each condensing vessel had been previously coated on the inside with 300 grams of a 60% solution of "Desorbate" coffee base extract obtained from a previous run (180 grams Desorbate base dissolved in 120 ml of distilled water). The concentrate was poured into the cylindrical vessels and then the vessels were rotated in a near horizontal position until an even coating of concentrate was achieved on the inside walls. The vessels were then quickly placed into the liquid
nitrogen to freeze the even coating.

E.    Evacuation of Column

After displacing the air from the column and
connecting the condensers to the column on the
one side and to the vacuum pump on the other side,
the vacuum pump was turned on.  The bottom valve
of the column was only slightly opened to prevent
the highly volatile materials from rushing through
the condensing system.  Evacuation of the column
under these delayed conditions took about 10
minutes.

F.    Desorption and Condensing of Aroma Flavor Frost

After evacuating the column to 1 Torr, the
solenoid valve was opened by an electrical switch
for approximately one second.  One-half liter of
water from the reservoir was pulled into the
nozzle system.  The nozzle system produced an
even spray pattern over the coffee bed.  The
vacuum in the column caused part ($\sim$20%) of the
hot water (99°C) to transform into steam.  The
transformation into steam was accompanied by a
temperature drop from 99°C to 20°C of the steam/
water mixture.

The water was immediately soaked up by the
coffee particles and in turn desorbed volatile
gases like $CO_2$ and coffee aroma-flavor compounds from
the coffee flakes.  The evaporation of the volatiles was visually observed by the formation of
gas bubbles at the interface between the wetted
part and the dry part of the coffee bed.

As soon as the formation of gas bubbles subsided, another spurt of hot water was placed
onto the column bed.  This spurt drove the inter-face deeper into the coffee bed. The interface developed without any channeling or uneven migration into the coffee bed.

As soon as the coffee particles were saturated with water, dissolution of soluble materials into the aqueous phase occurred as evidenced by the formation of a dark brown band of solubles. This dark brown band was moved deeper into the coffee bed and renewed activity of volatiles desorption occurred when additional spurts of water were applied. The subsequent Table gives detailed information on various parameters like temperature in and above the coffee bed, the vacuum at the interface and above the column bed, the quantities of water applied, the time elapsed, etc.

## TABLE I
### VARIOUS DESORBATE PARAMETERS

| Time (Min.) | Head Vacuum (Torr) | Temperature °C Above | Top of Bed | Bottom | Hot Water Added (liters) | Remarks |
|---|---|---|---|---|---|---|
| 000 | 1 | 2 | -7 | -7 | 00.0 | ) $CO_2$-purging |
| 007 | 40 | 30 | 30 | 15 | 08 | ) |
| 010 | 40 | 36 | 36 | 36 | 10 | ) Collection |
| | | | | | | ) of Aroma/ |
| | | | | | | ) Flavor |
| | | | | | | ) Frost |
| 015 | 80 | 46 | 46 | 46 | 14.5 | ) |
| 025 | 100 | 50 | 50 | 47 | 22.5 | ) |
| 030 | 100 | 46 | 50 | 46 | 23.0 | ) Break |
| | | | | | | ) Through |
| 040 | 90 | 46 | 45 | 42 | 5.0 | ) Collection |
| 055 | 90 | 52 | 50 | 49 | 33.0 | ) of 1st cut |
| 075 | 100 | 50 | 48 | 47 | 39.0 | ) Collection |
| 085 | 90 | 49 | 48 | 47 | 42.0 | ) of base |
| 090 | 95 | 49 | 49 | 47 | 46.0 | ) material |
| 110 | 90 | | | | | ) |

The volatiles consisted of $CO_2$, aroma/flavor compounds desorbed from the coffee particles (volatile on their own or steam-distilled), and steam (generated at the nozzle system due to the vacuum condition or produced at the interface and wetted coffee bed from water evaporating from the coffee particles).

The volatiles produced a whitish-slightly yellow layer of aroma/flavor-frost in the condensers. The condensers were protected against light during collection of the aroma/flavor-frost.

As shown in Table I, the collection of the aroma/flavor-frost was finished after 30 minutes run-time and application of 23 liters of hot water through the nozzle system. At this time, the interphase had advanced to the false bottom and started to break through the layers of cheesecloth. At this point the aroma/flavor-frost traps were removed from the column system.

The traps were sealed with cellulose plugs and kept in the dark in liquid nitrogen jackets until combining with the first liquid Desorbate coffee base effluent extract as described next.

G. The First Liquid Desorbate Effluent

After removing the aroma/flavor-frost traps, a single 10-liter capacity trap was placed into the column system. The trap was cooled with liquid nitrogen.

After a total of 55 minutes run-time and addition of a total of 33 liters of water to the column bed, 3.606 liters of dark liquid Desorbate effluent coffee base extract were condensed in the trap. This liquid effluent coffee base extract showed a solids content of 20.6% as measured with a refractometer.

H.    Preparation of Coffee AFC

The first liquid Desorbate effluent coffee base extract containing 20.6% solids was adjusted to 30% solids content by adding dry Desorbate coffee base extract obtained from a previous run. The dry Desorbate base was dissolved directly into the first liquid base effluent at a temperature of not more than 10°C. Sufficient 30% solids coffee base extract containing the first liquid effluent was poured into each of the three aroma/flavor-frost traps, each of which contained about 400 g of frost. A total of 400 g of Desorbate base was contained in each flask.

Aliquots of first liquid effluent coffee base extract adjusted to 30% solids were poured into each frost trap while rotating the trap in a slanted position to coat the frost uniformly with coffee solids. The liquid effluent froze during this process onto the frost.

Then the flask was warmed up under a stream of water at 25°C until sufficient melting of the 60% solids flask coating was achieved to slide the entire contents at once into a plastic bag which had been previously purged with nitrogen.

The plastic bag was then closed loosely and the contents were kneaded until uniform plasticity was achieved. $CO_2$ escaped during this operation. The plastic bags were then placed into a freezer box kept at -20°C. After 30 minutes' time the bags were removed for a second kneading. The bags were returned to the cold storage for another 30-minute period and then again kneaded. This process was repeated four times.

The contents of the bags were then frozen solid at -60°C. The plastic, surrounding the solid frozen aroma/flavor concentrate (AFC), was then peeled away and the frozen AFC was crushed coarsely to fit into the feeder of a "Buss Condux" toothed disc mill.

The crushed AFC was then milled on the Buss-Condux mill which was housed in a cryogenic chamber at -70°C. The milled particles were then sieved on a SWECO vibrating sieve system (also housed in the same cryogenic chamber). The particles ranging from 850 microns to 2300 microns were collected. Coarser particles were reground and resieved, etc. Particles finer than 850 microns were discarded (~25% of total AFC). The desired sieved fraction of AFC was then immediately placed onto freeze-drying trays which had been cooled down with liquid nitrogen, the trays were then placed in a freeze-dryer and the AFC was dried to a $H_2O$ content between 2 to 2.8%.

Approximately 5% of the AFC was freeze-dried with a dynamic freeze dryer (Leybold-Heraeus). The bulk of the AFC was freeze-dried with static freeze dryers. Combining the AFC after freeze drying ~900g of AFC was obtained from each Desorbate run. Preliminary gustatory testing indicated that a range of 50 to 140 mg of AFC per 1 g of grain/coffee base was suitable. The AFC comprised from about 10 wt. % of cryogenically collected coffee aroma-flavor compounds. The preferred AFC level was 7.5% of the coffee-grain dry mix to yield a cup of "coffee" of considerably improved aroma/flavor characteristics as compared to the base material without AFC. This mix was also found to be more acceptable as "coffee" to coffee drinkers as the leading instant coffees.

## EXAMPLE III

As shown in Table I, collection of more Desorbate coffee base extract was carried out after the collection of the first liquid Desorbate effluent. About 15.4 liters of coffee base extract was collected. Solids content of this base was 13%. Application of steam/water spurts was stopped after a total run time of 90 minutes to avoid dilution of the Desorbate liquid coffee base extract. A total of 46 liters of $H_2O$ had been applied to the column bed.

The draw-off ratio at this point was 1:0.952 (weight of roasted coffee beans vs. weight of column effluent). A yield of 13.7% solids had been obtained. Continuation of runs to a draw-off ratio of 1:2 or greater achieves solids yields of up to 27% solids.

The Desorbate coffee base extract was poured into three plastic bags holding ~5 liters each. The base was slowly frozen at -20°C and then cooled down to -60°C. The frozen base was then milled and sieved in the same fashion as the AFC of Example II. The sieved base of the proper particle size was then freeze-dried.

The dry Desorbate coffee base extract prepared in the manner as outlined above was used to prepare the AFC needed for the coffee-grain product of this invention as set out in Example II.

## EXAMPLE IV

A refined grain extract was made from pre-roasted 4-day dark roast malted barley having a photovolt color reading of 68.

The roasted malted barley was prewet with tap water to a moisture level of about 15%. The barley was dechaffed with 30 pounds of blowing air in a rotary drum at 90 psig for 5 minutes.

The grinding was performed in a "Gump" grinder using a 13 and out setting. Sieve Analysis is set out in Table II.

## TABLE II

| Sieve Analysis (%) | Sieve |
|---|---|
| 22.1 | 6 |
| 56.4 | 8 |
| 9.4 | 12 |
| 7.0 | 20 |
| 5.1 | PRN |

The extraction of the roasted and ground barley was carried out in a conventional coffee columnar extraction system. The processing conditions are set out in Table III and Table IV.

## TABLE III

Temperature Profile

| Column No. | 1 | 2 | 3 | 4 | 5 | 6 |
|---|---|---|---|---|---|---|
| Inlet Temperature - °C | - | 65.6 | 76.7 | 87.8 | 93.3 | - |

Drawoff Ratio - 2.0-3.0

Cycle Time - 30 minutes

The spent column was blown after collecting approximately 3/4 of the total drainoff.

## TABLE IV

Extraction data

| | |
|---|---|
| Average solids concentration | 7.4% |
| Extraction yield | 20.1% |
| Total extract produced | 1207.9 lbs. |
| Total grain extracted | 460.2 lbs. |

Prior to refining by flash evaporation, all feed material was filtered with 0.5-1.0 micron filters #E39R10S.

Refining by thin film evaporation

(a)  equipment used: rising and falling film evaporator at 107°C.

(b)  procedure: the equipment was started up on water until the following conditions were established and then the barley grain extract was fed into a thin film evaporator and concentrated to a 45% solids grain extract.

The thin film evaporated refined malted barley extract having a solids content of about 45% was spray-dried.

EXAMPLE V

The barley spray-dried refined grain extract powder of Example IV and a commercially spray-dried coffee base extract powder were mixed in a ribbon blender and then agglomerated.  This powder blend comprised 49.0% said refined grain extract powder and 51% coffee base extract powder.  The agglomerated product was run through the "Rotex" Siever on a No. 6 size screen.

Final Product Blend.  After the powders were ribbon blended, densified through an Alpine[TM] mill and agglomerated, the final step of mixing the AFC of Example II into the material was done by riffling the products together.  Two passes on one riffler tank was used.  The final product blend percentages were: dried, refined grain extract 44.0%, instant coffee extract base, 48.5%, and said AFC 7.50%. This product provided a hot beverage which smelled and tasted like real coffee and was surprisingly as acceptable to coffee drinkers as the leading instant coffee.

## EXAMPLE VI

Another AFC was prepared from 10 kg of roasted and ground coffee beans following the general procedure set out in Example II. Four hundred grams of cryogenically collected Desorbate coffee aroma-flavor frost were obtained by condensation in a cylindrical condensing vessel at -180°C and an absolute pressure of about 0.1 mm of mercury. One liter of a liquid coffee extract base concentrate with a 20% solids content at a temperature not higher than 5°C was poured into the cylindrical vessel containing the aroma and flavor frost. As soon as some melting of the frost occurred, the frost, together with the liquid coffee extract base concentrate, was poured into a plastic bag which had been previously flushed with nitrogen gas.

After the frost and coffee extract concentrate were added to the bag, the bag was sealed. The frost was now completely melted by gentle agitation and kneading. No headspace was permitted in the bag, thus preventing the vaporization of the highly volatile aroma materials. After complete melting of the frost and mixing, the bag was cooled in a freezing chamber at a temperature in the range of -4°C to -25°C until the mixture solidified (several hours). At intervals of 30 to 45 minutes, the bag was removed from the chamber and agitated or kneaded to melt the small ice crystals.

After the mixture solidifies, the bag with contents was immersed in liquid nitrogen. The bag was removed and the solids crushed and sieved to a particle size in the range of 500 to 1500 microns. The mixture was then freeze-dried using a commercial vibrational freeze-drying apparatus at temperatures of from -50°C to -110°C.

Coffee-like instant coffee-grain dry beverage mixes were prepared by adding from 30 mg to 200 mg of this coffee AFC to 1 g of the dried, refined grain extract of Example I.

A prepared mix was made which contained 30 mg of this AFC per gram of the refined grain extract of Example I. This mix produced a beverage that was described by expert coffee tasters as virtually indistinguishable from a 100% coffee beverage.

## EXAMPLE VII

Another AFC was prepared from roasted and ground coffee beans following the general procedure set out in Example II except that the flaked coffee was admixed with finely ground ice ($H_2O$) in an amount sufficient to maintain a substantially melt-free and uniform admixture when loading into the Desorbate column.

The use of finely ground ice allows water vapor to pass through the bed and the melting ice provides more uniform wetting for more uniform desorption. A preferred ratio of roast and ground coffee to ground ice on a weight basis is from about 2.5:1 to about 4:1.

For a complete disclosure of the method set out in Example VII see U.S. Patent No. 4,092,436 to MacDonald et al, May 30, 1978, herein incorporated by reference in its entirety.

0006646

WHAT IS CLAIMED IS:

1. A coffee-like instant coffee-grain dry beverage mix characterised by from 15 to 98 wt. % of refined grain extract, from 0 to 84 wt. % of coffee base extract, and from 0.05 to 3.0 wt. % of cryogenically collected aroma-flavor compounds.

2. A beverage mix according to Claim 1 characterised by from 15 to 80 Wt. % of said refined grain extract and from 2 to 60 wt. % of said coffee base extract and from 1 to 20 wt. % of a concentrate of said aroma-flavor compounds.

3. A method for preparing the instant coffee-grain dry mix of Claim 1 or 2 characterised in that said refined grain extract is prepared by:-

   (a) distilling and separating grainy flavor and aroma constituents from an aqueous extract of roast and ground grain, said grain extract having an initial soluble solids content of at least 5%;

   (b) concentrating said grain extract to 20% to 60% solids; and

   (c) drying said concentrated grain extract.

4. A method according to Claim 3 characterised in that said distilling, separation, and concentrating of said grain extract is accomplished by flash evaporation.

5. A method according to Claim 3 or 4 characterised in that said aqueous grain extract is obtained by process steps comprising:

   (a) slowly passing wet steam through a zone containing roasted and ground grain in such a manner which avoids flooding of said zone and while said zone is held at an absolute pressure of from 0.1mm to 200mm of mercury, thereby to provide a continually moving interface between dry and wetted particles of said roast and ground grain;

(b) prior to the reaching of said moving interface to the end of said zone and the emergence of said aqueous grain extract from said zone, expelling a steam fraction containing objectionable grainy aroma and flavor bodies removed from said roast and ground grain.

6. A method according to any of Claims 3 to 5 characterised in that said refined grain extract is prepared from roast and ground grain selected from malted barley, barley, rye, wheat, corn, chicory and soybeans.

7. A method according to any of Claims 3 to 6 characterised in that said refined extract is refined by a process comprising: passing steam through an aqueous solution containing up to 50% grain extract solids; said steam removing objectionable grainy flavor bodies therefrom.

8. A method according to any of Claims 3 to 7 characterised in that said grain is made from roasted malted barley having a color about 65 to 95 photovolts.

9. A method according to any of Claims 3 to 8 characterised by:-

(a) steam stripping roast and ground coffee at a temperature below $100^{\circ}$C and a pressure of below 200mm of mercury; collecting steam stripped coffee aroma flavor volatile compounds as a frost by condensation at a temperature of below $-73^{\circ}$C and at an absolute pressure of from 0.1 to 200mm mercury; melting the frost by contacting the frost with a sufficient amount of an aqueous extract having a soluble solids content of from 25% to 65%, said extract being selected from the group consisting of extracts of coffee or grain; and drying said aroma-flavor compounds in an aroma-flavor concentrate; and

(b) adding said aroma-flavor concentrate to said refined grain extract powder to provide said coffee aroma-flavor compounds at a level of from 0.05 wt. % to 3.0 wt. % in said coffee-grain beverage mix.

10. A method according to Claim 9 characterised in that the steam stripping step comprises:-

(a) pulsing or slowly passing water and wet steam through a zone containing roasted and ground coffee in such a manner which avoids flooding of said zone and while said zone is held at a temperature below $100^{\circ}C$ and at an absolute pressure of from about 0.1mm to 200mm of mercury, thereby to provide a continually moving interface between dry and wetted particles of said roast and ground coffee; and

(b) prior to the reaching of said moving interface to the end of said zone and the emergence of a liquid extract from said zone, collecting said steam stripped coffee aroma-flavor volatile compounds as a frost by condensation at a temperature of below about $-73^{\circ}C$ and at an absolute pressure of from about 0.1 to about 200mm of mercury.

11. A method according to any of Claims 3 to 8 characterised by said coffee-aroma compounds being prepared by a process comprising pulsing or continuously passing wet steam into a zone containing said roasted and ground coffee in a manner which avoids flooding said zone and while said zone is held at an absolute pressure of from 0.1mm to 200mm of mercury, thereby providing continuously moving interface between dry and wetted particles of said roast and ground coffee; prior to the reaching of said moving interface to the end of said zone and the emergence of an aqueous coffee base extract from said zone, collecting a coffee aroma- and flavor-containing frost fraction by condensing aroma flavor volatile compounds removed from said roast and ground coffee at a temperature of from about $-20^{\circ}C$ to $-200^{\circ}C$; thereafter melting said aroma- and flavor-containing frost fraction with an aqueous extract containing water-soluble solids selected from the group consisting of proteins and carbohydrates, combining said frost fraction with said aqueous extract at a temperature below about $5^{\circ}C$ in a closed container which has been purged with inert gas and which contains no air space surrounding said mixture; freezing said mixture with agitation at a temperature in the range of from about $-4^{\circ}C$ to $-200^{\circ}C$ to provide a frozen mixture wherein the ice crystals exceed 1000 microns; comminuting the resultant frozen mixture to a particle size of from about 500 to 2000 microns; and freeze-drying said particles.

12.   A method according to Claim 11 characterised in that said roasted and ground coffee, prior to loading into said zone, is cooled to a temperature below the melting point of ice and mixed with finely ground ice $(H_2O)$, said mix being maintained in a melt-free state until said wet steam is passed there-through.

## DOCUMENTS CONSIDERED TO BE RELEVANT

| Category | Citation of document with indication, where appropriate, of relevant passages | Relevant to claim |
|---|---|---|
| | FR - A - 2 164 618 (D.E.J. INTERNATIONAL RESEARCH)<br>* Claim 1; examples I and II *<br><br>-- | 1,2 |
| | GB - A - 687 175 (P. LEMONNIER)<br>* Claims 1,2,7,12,16,17 *<br><br>-- | 1,9 |
| | FR - A - 2 340 053 (PROCTER & GAMBLE)<br>* Claim 1; example 1 *<br><br>-- | 9,10, 11 |
| D | US - A - 3 997 685 (R. STROBEL)<br>* Claims 1,12,22,24; column 14, line 54 - column 15, line 10; example 12 *<br><br>-- | 1,9-11 |
| A | FR - A - 896 201 (LES GOURMETS) | |
| A | NL - C - 58 301 (K. BEIJER) | |
| A | CH - A - 171 028 (JEMAC) | |
| A | DE - C - 356 026 (M.WEISENFELD) | |
| A | FR - E - 53 526 (H. LENIER) | |
| A | M. SIVETZ "Coffee processing technology" vol. 2, 1963, pages 260-261,<br>Avi Publishing Co. Westport, Connecticut<br><br>---- | |

### CLASSIFICATION OF THE APPLICATION (Int. Cl.3)

A 23 F 5/44
5/48

### TECHNICAL FIELDS SEARCHED (Int.Cl.²)

A 23 F 5/44
5/40
5/48
5/38

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-10-1979 | DESMEDT |